# DEMANDE DE BREVET EUROPEEN

(11) **EP 2 495 132 A1**
(43) Date de publication de la demande: **05.09.2012**
(21) Numéro de dépôt: 12155474.5
(22) Date de dépôt: 14.02.2012
(51) Int. Cl.: B60R 5/04, B60N 3/00, B60P 1/00

(54) **Table escamotable pour véhicule.**

(30) Priorité: 03.03.2011 FR 1151751
(71) Demandeur: Peugeot Citroën Automobiles SA, 78140 Vélizy Villacoublay (FR)
(72) Inventeur: Mention, Cédric, 93420 VILLEPINTE (FR)

(57) **Abrégé**

L'invention a trait à une table escamotable pour véhicule. La table 10 comprend une cadre 12 monté rigidement sur une surface de chargement 4 d'un véhicule tel que notamment un véhicule utilitaire, un plateau 14 et quatre bras pivotants 16 reliant le plateau 14 au cadre 12. Les bras pivotants 16 forment deux parallélogrammes d'inclinaison variable et dont les bords correspondants sont généralement parallèles. Le plateau 14 peut ainsi être déployé depuis une position escamotée contre la surface de chargement 4 en exerçant un effort initialement essentiellement dirigé vers le haut et ensuite dirigé vers l'arrière et en fin de mouvement dirigé vers le haut de manière à amortir la descente du plateau 14. Des moyens de blocage des bras pivotants sont prévus. Un piétement 18 et 20 repliable est également prévu. Cette table escamotable permet de former rapidement et facilement une surface de travail stable à une hauteur choisie en saillie du véhicule.

## Description

L'invention a trait à une table escamotable pour véhicule. Plus particulièrement, l'invention a trait à une table escamotable pour véhicule utilitaire, destinée à servir de surface de travail comme par exemple d'établi. L'invention a trait également à un véhicule équipé dudit dispositif.

Divers dispositifs de table escamotable pour véhicule sont connus de l'état de la technique.

Le document de brevet WO 98/45143 divulgue une table escamotable pour le coffre arrière d'un véhicule. Ce dispositif comprend un plateau monté sur le plancher du coffre arrière d'un véhicule via des glissières assurant un guidage du plateau selon un mouvement de translation rectiligne. Lorsque le véhicule est à l'arrêt et que le coffre arrière à bagages est ouvert, le plateau en question peut être manipulé essentiellement par un effort de traction de manière à le déplacer en translation parallèlement au plancher du coffre. Les glissières sont conçues pour assurer un arrêt du plateau dans sa position déployée de manière à ce que le plateau soit maintenu en porte-à-faux à l'arrière du véhicule, formant ainsi une table. Des pieds repliables sont prévus au niveau du bord du plateau qui est en saillie de manière à prendre appui sur le sol à l'arrière du véhicule, permettant ainsi de soulager les glissières et d'assurer une stabilité satisfaisante à la table. Alternativement, le plateau peut être désolidarisé des glissières de manière à pouvoir être utilisé comme table totalement indépendante du véhicule. II pourvu de pieds repliables approximativement à chaque coin pour cette utilisation indépendante des glissières du véhicule. Ce dispositif est intéressant d'un point de vue manipulation et encombrement. En effet, le déploiement du plateau dans sa position en saillie du véhicule ne requiert qu'un simple effort de traction dirigé vers l'arrière après avoir déverrouillé le plateau. De plus, le fait que le plateau soit parallèle et proche du plancher du véhicule fait que son encombrement est minimal. Malgré ces avantages, ce dispositif présente quelques inconvénients, à savoir notamment le fait que la hauteur du plateau dans sa position partiellement arrimée au véhicule est assez faible. En effet, elle correspond approximativement à la hauteur du plancher du coffre à bagages, c'est-à-dire une hauteur sensiblement inférieure à la hauteur habituelle d'une table. Des sièges spécifiques sont par conséquent nécessaires pour pouvoir utiliser la table de manière confortable. De plus, cette hauteur réduite rend le plateau inutilisable en tant qu'établi. Le mouvement de translation rectiligne impose également que le plancher du coffre du véhicule ne présente pas de rebord arrière. Les véhicules du type « break » auxquels ce dispositif est particulièrement destiné ne présentent pas nécessairement tous un plancher de coffre à bagage sans rebord arrière.

Le document de brevet DE 43 40 675 A1 divulgue un fond de coffre à bagage de véhicule modulable en une table du type camping ou en un conteneur parallélépipédique. Ce fond de coffre est conçu pour se noyer dans le plancher du coffre à bagage en position escamotée. Pour être converti en table de camping, ce fond doit être extrait du plancher du coffre à bagages et des pieds disposés séparément dans un logement spécifique doivent être fixés au fond en question. Cette opération requiert par conséquent des manipulations contraignantes. De plus, la table ainsi formée ne peut être utilisée comme table de travail, comme par exemple un établi, en raison de l'absence de liaison rigide avec le véhicule. En effet, une surface de travail comme un établi doit présenter un minimum de stabilité notamment dans le plan de la surface de travail.

Le document de brevet US 5,992,331 divulgue similairement au document précédent une table repliable du type camping qui en position escamotée est noyée dans le plancher du coffre à bagages d'un véhicule. A la différence de l'enseignement précédent, les pieds de la table sont montés pivotants à demeure sur le plateau. Cet enseignement présente par conséquent essentiellement les mêmes inconvénients que le document précédent, à savoir les manipulations contraignantes (bien que moins complexes que celle du document précédent en raison des pieds pivotants) et également le fait que la table n'est pas adaptée à servir de surface de travail tel qu'un établi.

L'invention a pour objectif de proposer une table escamotable pour véhicule qui pallie au moins un des inconvénients sus mentionnés. Plus particulièrement, l'invention a pour objectif de proposer une table escamotable apte à être utilisée comme surface de travail.

L'invention a pour objet une table escamotable pour véhicule, comprenant: un plateau; des moyens de guidage aptes à guider le plateau depuis une position escamotée dans le véhicule vers une position déployée; remarquable en ce que les moyens de guidage sont à bras pivotants configurés de manière à guider le mouvement de déploiement du plateau suivant un mouvement curviligne.

Grâce à ces mesures, le plateau peut être facilement déployé à une hauteur choisie qui peut être supérieure à celle du plancher du véhicule auquel les bras sont montés. De plus, ce mouvement permet au plateau de contourner un éventuel rebord arrière du plancher. Le plateau peut ainsi être utilisé comme table ou comme établi, notamment à une hauteur compatible avec une position debout de son utilisateur.

Selon un mode avantageux de l'invention, les moyens de guidage comprennent au moins deux bras dont une extrémité est montée pivotante sur le plateau et l'autre extrémité est destinée à être montée pivotante sur le plancher du véhicule.

Selon un autre mode avantageux de l'invention, les deux bras sont disposés de part et d'autre de la direction générale de translation du plateau, les deux bras étant préférentiellement parallèles.

La présence d'un bras de chaque côté latéral de la table permet déjà de guider le mouvement du plateau selon une trajectoire curviligne où le plateau pourra conserver ne fût-ce qu'approximativement son inclinaison. Un piétement sera dans ce cas nécessaire.

Selon un encore autre mode avantageux de l'invention, les moyens de guidage comprennent quatre bras disposés de part et d'autre de la direction générale de translation du plateau et de part et d'autre d'une direction comprise dans le plan du plateau et perpendiculaire à la direction générale de translation du plateau, les quatre bras formant préférentiellement deux parallélogrammes d'inclinaison variable.

Préférentiellement le mouvement curviligne du plateau est au moins approximativement une translation, à savoir un mouvement dans lequel les lignes tracées sur le solide en mouvement restent parallèles. Les mesures sus mentionnées permettent un tel mouvement.

Selon un encore autre mode avantageux de l'invention, la table comprend un cadre sur lequel les bras des moyens de guidage sont montés pivotants, le cadre étant destiné à être fixé au plancher du véhicule.

Selon un encore autre mode avantageux de l'invention, le plateau comprend un piétement escamotable monté sur une zone du plateau comprise dans sa moitié avant selon la direction de déploiement.

Selon un encore autre mode avantageux de l'invention, le piétement est pivotant par rapport à un axe transversal à la direction générale de déploiement du plateau, l'axe de pivotement du piétement étant préférentiellement parallèle au plateau.

Selon un encore autre mode avantageux de l'invention, le piétement est réglable en hauteur, préférentiellement avec des moyens coulissants selon la direction générale du piétement pour un réglage d'approche et/ou des moyens à filetage selon la direction générale du piétement pour un réglage fin.

Selon un encore autre mode avantageux de l'invention, la table comprend des moyens de blocage du plateau dans la position déployée, ces moyens comprenant préférentiellement un dispositif basculant à crochet monté sur le plateau et apte à coopérer avec un des bras pivotants.

L'invention a également pour objet un véhicule comprenant un plancher, remarquable en ce que la table comprend une table escamotable selon l'invention, la table étant montée sur le plancher.

Selon un mode avantageux de l'invention, la table est montée sur une zone du plancher formant une surface de chargement du véhicule.

Selon un autre mode avantageux de l'invention, la table est disposée de manière à ce que le plateau dépasse du plancher du véhicule en position déployée.

D'autres particularités et avantages de l'invention seront mieux compris à l'aide de la description des figures parmi lesquelles :
- la figure 1 est une représentation en perspective d'un véhicule utilitaire illustrant la surface de chargement du véhicule destinée à recevoir la table escamotable conforme à l'invention;
- la figure 2 est une illustration de la surface de chargement du véhicule de la figure 1, équipé d'une table escamotable conforme à l'invention;
- la figure 3 est une illustration détaillée de la table escamotable de la figure 2, en position déployée.

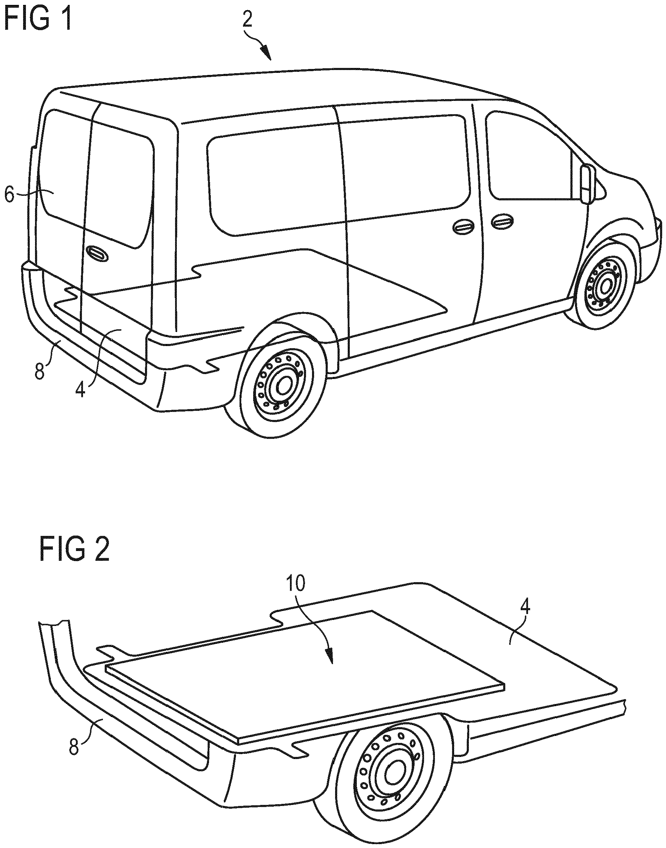

Un véhicule utilitaire 2 classique et bien connu est illustré à la figure 1. On peut y observer par transparence la surface de chargement 4 s'étendant depuis approximativement le pare-choc arrière 8 jusqu'aux sièges avants (non représentés). La surface de chargement est accessible depuis l'arrière du véhicule via les deux portes 6 pivotantes par rapport à un axe généralement vertical. II est à noter que d'autres configurations de portes sont également possibles comme par exemple un volet basculant par rapport à un axe généralement horizontal disposé à hauteur du toit du véhicule. La surface chargement présente une forme généralement rectangulaire, à l'exception des découpes pour les passages de roue arrière. La surface de chargement 4 est généralement alignée avec la partie supérieure du pare-choc en regard de ladite surface. II est à noter que le pare-choc pourrait être configuré de manière à former un rebord arrière pour la surface de chargement. II est également à noter que le type de véhicule illustré à la figure 1 est purement exemplatif et en aucun cas limitatif. L'invention est applicable à toutes sortes de véhicule présentant une surface de chargement accessible depuis l'extérieur via un ouvrant du véhicule.

La table escamotable 10 conforme à l'invention en position escamotée ou repliée est illustrée de manière simplifiée à la figure 2. On peut y observer qu'elle couvre une partie seulement de la surface de chargement 4 et qu'elle s'étend longitudinalement depuis la proximité du bord arrière de la surface de chargement 4 jusqu'à une zone de la surface de chargement à distance de son bord avant. Cette disposition permet de laisser libre une partie non négligeable de la surface de chargement. La partie laissée libre peut être supérieure à 10%, préférentiellement 15%, plus préférentiellement encore 20% de la surface totale. La table escamotable 10 occupe en position repliée idéalement une majeure partie de la largeur de la surface de chargement, par exemple plus de 80%, préférentiellement 85%, plus préférentiellement 90% de la largeur disponible. II est à noter également que la table pourrait occuper sensiblement moins de place selon la largeur de la surface de chargement, notamment afin de laisser libre une bande sur au moins une partie de la longueur de ladite surface.

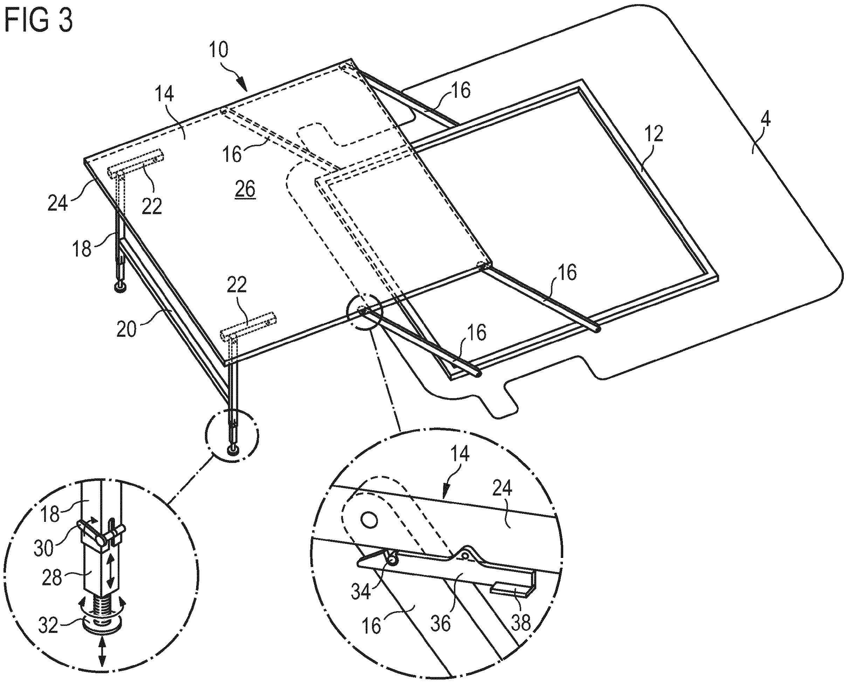

La table escamotable 10 de la figure 2 est illustrée à la figure 3 en position déployée par rapport à la surface de chargement 4. Elle comprend un plateau 14 généralement plan relié à un cadre 12 via quatre bras pivotants 16. Le cadre est fixé rigidement à la surface de chargement 4 du véhicule. Le plateau est préférentiellement une plaque de tôle métallique avec des bords tombés de manière à former un volume mince apte à recevoir le cadre 12 et les bras pivotants. 16. En effet, le cadre est préférentiellement de forme similaire à celle du plateau mais de taille légèrement inférieure de manière à pouvoir être recouvert par la face arrière de la tôle du plateau, les bords du plateau entourant le cadre 12. Les bras 16 sont disposés de manière à former deux parallélogrammes de chaque côté du plateau et du cadre par rapport à leur axe longitudinal. Ces deux parallélogrammes sont disposés de manière à ce que leurs côtés respectifs soient parallèles. Deux bras 16 sont montés articulés à une de leurs extrémités à chaque bord latéral du cadre à proximité du bord arrière. Ces bras sont montés articulés à leur autre extrémité au plateau à une zone approximativement centrale. Deux autres bras 16 sont montés articulés à une de leurs extrémités à chaque bord latéral du cadre approximativement à une zone centrale selon sa longueur. Ces deux bras sont montés articulés à leur autre extrémité au plateau à proximité de son bord avant. Les quatre bras ont préférentiellement la même longueur, cette longueur étant inférieure ou égale à la moitié de la longueur du cadre 12. Cette configuration permet aux bras de s'aligner deux par deux de chaque côté lorsque la table est en position repliée. Ces moyens de guidage à bras pivotant permettent un mouvement de translation curviligne du plateau depuis sa position escamotée jusqu'à sa position déployée et vice versa.

II est à noter que les bras ne doivent pas nécessairement former des parallélogrammes et avoir la même longueur. En effet, il est possible de prévoir une cinématique plus complexe qui pourrait notamment imposer une variation de l'inclinaison du plateau lors de son mouvement.

La cinématique du mouvement du plateau avec la configuration des moyens de guidage à bras pivotant de la figure 3 est la suivante. Suite à un effort manuel majoritairement dirigé vers le haut, avec éventuellement une composante vers l'arrière, le plateau va se soulever et entamer un mouvement combiné vers le haut et vers l'arrière. Au début, la composante verticale du mouvement sera majoritaire, expliquant par là l'intérêt d'appliquer au début un effort dont la composante majoritaire est dirigée vers le haut. Au fur et à mesure de la rotation des bras pivotants depuis leur position horizontale, la composante horizontale du mouvement va augmenter au détriment de la composante verticale jusqu'au moment où les bras seront à la verticale. Passé ce cap, le plateau va entamer un mouvement de descente tout en continuant à se déplacer horizontalement.

Des moyens de blocage des bras peuvent être prévus (non représentés) afin de limiter la descente du plateau 14. Dans ce cas, le plateau pourra se stabiliser à une position choisie, pouvant ainsi servir de surface pour des travaux et/ou des activités légères comme par exemple pour y poser un ordinateur, des documents ou encore un repas et/ou des boissons.

Des vérins à effort élastique et/ou amortisseurs peuvent être disposés entre le bras pivotants 16 et le cadre de manière à compenser et/ou amortir les efforts liés au poids de la table.

Un piétement repliable constitué par exemple de deux pieds 18 et d'une traverse 20 reliant ces deux pieds est prévu sur le plateau 14, à une partie du plateau faisant saillie du véhicule, plus particulièrement à une partie du plateau proche de son bord arrière. Le piétement est monté pivotant par rapport à des linteaux 22 disposés sur la face inférieure de la surface 26 du plateau 14. Au moins un des pieds 18 comprend une prolongation coulissante 28 que l'on peut arrêter au moyen d'un dispositif à serrage 30. La prolongation coulissante 28 peut prendre la forme d'un profilé de section extérieure proche de la section intérieure du pied 18, le profilé étant apte à y coulisser librement. Ce dernier comprend préférentiellement un élément d'appui 32 avec une tige filetée vissée dans un filetage correspondant sur le profilé 28. Le profilé coulissant 28 et les moyens d'arrêt 30 permettent un réglage rapide de la hauteur du piétement, utile notamment pour une approche de la hauteur voulue. L'élément d'appui avec la tige filetée permet un réglage plus précis de la hauteur particulièrement utile notamment suite à un premier réglage d'approche avec le profilé coulissant.

Le piétement est pivotant vers l'avant du plateau et est dimensionné de manière à pouvoir rentrer dans le périmètre du cadre 12 lors de l'escamotage de la table. II est à noter que le piétement peut être pivotant selon d'autres configurations que celle qui est illustrée, cette dernière étant purement exemplative.

En cas d'absence des moyens de blocage de bras évoqués plus haut, le piétement permet d'arrêter la descente du plateau et de le stabiliser. En cas de présence desdits moyens de blocage, le piétement permet de renforcer la stabilité du plateau notamment pour des travaux plus lourds comme ceux que l'on exécute sur un établi. En effet, dans le cas de l'utilisation de table comme établi, on peut être amené à y déposer des objets lourds, à y donner des chocs comme des coups de marteau notamment dirigés vers le bas. Le piétement avec ses moyens de réglage tels que décrits ci-avant sont particulièrement pratiques dans cette configuration car ils permettent une mise à niveau facile du piétement en libérant les moyens de serrage 30 de manière à ce que les prolongations coulissantes viennent en contact avec le sol par gravité. II suffit ensuite de resserrer les moyens de serrage 28 et d'éventuellement ajuster plus finement au moyen des éléments d'appui à vissage 32.

Des moyens de blocage empêchant une remontée du plateau en position déployée peuvent être prévus. En effet, des efforts dirigés vers le haut peuvent être exercés sur le plateau à certaines occasions, notamment lors de l'utilisation du plateau comme établi avec par exemple un étau. Pour parer à une remontée intempestive du plateau 14, un verrou pivotant 36 peut être prévu sur ou à proximité d'un bord du plateau 14 apte à coopérer avec un doigt de blocage 34 d'un des bras pivotants 16. Le verrou est préférentiellement monté avec ressort (non représenté) et avec une surface d'approche du doigt qui est inclinée. II comprend bien sur une encoche assurant un contact positif avec le doigt 34. Peu avant la fin du déploiement du plateau 14, c'est-à-dire peu avant la fin de son mouvement de descente en position sortie, le doigt 34 va venir en contact avec la surface inclinée du crochet 36 pour glisser le long de cette surface et faire basculer progressivement le crochet contre l'effort d'un ressort (non représenté). Lorsque le doigt est à hauteur de l'encoche à contact positif, le ressort va faire pivoter le crochet en sens inverse et immobiliser le doigt 34. Pour replier le plateau, le crochet doit alors être manipulé contre l'effort du ressort par exemple au moyen d'une patte 38 disposée ergonomiquement par rapport au plateau. Cette manipulation permet ainsi de procéder à l'escamotage de la table dans le véhicule. Dans la configuration de la figure 3, le crochet est prévu d'un seul côté de la table. Un tel dispositif de blocage peut alternativement être disposé de l'autre côté ou encore des deux côtés.

Les différents éléments constitutifs de la table, comme le cadre 12, le plateau 14, les bras 16 et le piétement 18, 20 sont préférentiellement métalliques, plus préférentiellement encore en acier pour des raisons de facilité de mise en oeuvre et de coût. II est à noter que d'autres matériaux peuvent être mis en oeuvre. Par exemple, le plateau peut être bi-matériau comme par exemple de l'acier et du bois. De l'aluminium peut également être envisagé.

## Revendications

1. Table escamotable (10) pour véhicule, comprenant:
- un plateau (14);
- des moyens de guidage (16) aptes à guider le plateau (14) depuis une position escamotée dans le véhicule vers une position déployée où une partie du plateau fait saillie hors du véhicule;
**caractérisé en ce que**
les moyens de guidage sont à bras pivotants (16) configurés de manière à guider le mouvement de déploiement du plateau (14) suivant un mouvement curviligne.

2. Table suivant la revendication 1, **caractérisée en ce que** les moyens de guidage comprennent au moins deux bras (16) dont une extrémité est montée pivotante sur le plateau (14) et l'autre extrémité est destinée à être montée pivotante sur le plancher (4) du véhicule.

3. Table suivant la revendication 2, **caractérisée en ce que** les deux bras (16) sont disposés de part et d'autre de la direction générale de translation du plateau, les deux bras étant préférentiellement parallèles.

4. Table selon l'une des revendications 2 et 3, **caractérisée en ce que** les moyens de guidage comprennent quatre bras (16) disposés de part et d'autre de la direction générale de translation du plateau (14) et de part et d'autre d'une direction comprise dans le plan du plateau (14) et perpendiculaire à la direction générale de translation du plateau, les quatre bras (16) formant préférentiellement deux parallélogrammes d'inclinaison variable.

5. Table selon l'une des revendications 1 à 4, **caractérisée en ce qu'**il comprend un cadre (12) sur lequel les bras (16) des moyens de guidage sont montés pivotant, le cadre (12) étant destiné à être fixé au plancher (4) du véhicule.

6. Table selon l'une des revendications 1 à 5, **caractérisée en ce que** le plateau (14) comprend un piétement escamotable (18, 20) monté sur une zone du plateau (14) comprise dans sa moitié avant selon la direction de déploiement.

7. Table suivant la revendication 6, **caractérisée en ce que** le piétement (18, 20) est pivotant par rapport à un axe transversal à la direction générale de déploiement du plateau (14), l'axe de pivotement du piétement (18, 20) étant préférentiellement parallèle au plateau.

8. Table selon l'une des revendications 6 et 7, caractérisée en ce le piétement est réglable en hauteur, préférentiellement avec des moyens coulissants (28) selon la direction générale du piétement pour un réglage d'approche et/ou des moyens à filetage (32) selon la direction générale du piétement pour un réglage fin.

9. Table selon l'une des revendications 1 à 8, **caractérisée en ce qu'**il comprend des moyens de blocage du plateau (14) dans la position déployée, ces moyens comprenant préférentiellement un dispositif basculant à crochet (36) monté sur le plateau (14) et apte à coopérer avec un des bras pivotants (16).

10. Véhicule comprenant un plancher **caractérisé en ce qu'**il comprend une table escamotable (10) selon l'un des revendications 1 à 9, la table (10) étant montée sur le plancher.

11. Véhicule selon la revendication 10, **caractérisé en ce que** la table (10) est montée sur une zone du plancher formant une surface de chargement (4) du véhicule.

12. Véhicule selon la revendication 11, **caractérisé en ce que** la table (10) est disposée de manière à ce que le plateau (14) dépasse du plancher du véhicule en position déployée.
